Europäisches Patentamt

European Patent Office

Office européen des brevets

(19)

(11) Veröffentlichungsnummer : **0 074 482**
**B1**

(12) **EUROPÄISCHE PATENTSCHRIFT**

(45) Veröffentlichungstag der Patentschrift :
21.10.87

(21) Anmeldenummer : 82106819.4

(22) Anmeldetag : 28.07.82

(51) Int. Cl.⁴ : **B 21 C 37/06**, B 21 C 37/12,
F 16 L   9/16

(54) Verfahren zur Herstellung mehrschichtiger Schraubennahtrohre.

(30) Priorität : 11.09.81 DE 3135966

(43) Veröffentlichungstag der Anmeldung :
23.03.83 Patentblatt 83/12

(45) Bekanntmachung des Hinweises auf die Patenterteilung : 21.10.87 Patentblatt 87/43

(84) Benannte Vertragsstaaten :
BE DE FR IT

(56) Entgegenhaltungen :
AT-B-    75 890
DE-A- 1 602 335
DE-B- 1 099 284
DE-C-    548 576
GB-A-    930 214
HOOPED PIPE, G.DENOR: "New Concept requires less steel for high pressure pipe lines", January 1975, PIPE LINE INDUSTRIE, pages 33-36

(73) Patentinhaber : **Hoesch Aktiengesellschaft**
**Eberhardstrasse 12**
**D-4600 Dortmund 1 (DE)**

(72) Erfinder : **Gross, Heinz, Dipl.-Ing.**
**Reichsmarkstrasse 142**
**D-4600 Dortmund 30 (DE)**
Erfinder : **Koch, Friedrich-Otto, Dipl.-Ing.**
**Auf der Bleiche 44**
**D-4750 Unna-Massen (DE)**
Erfinder : **Peeck, Adolf, Dr. Ing.**
**Starenweg 56**
**D-4700 Hamm 1 (DE)**
Erfinder : **Wennemann, Werner**
**Wildbannweg 51**
**D-4600 Dortmund 50 (DE)**

## Beschreibung

Die Erfindung betrifft ein Verfahren gemäß dem Oberbegriff des Anspruchs 1.

Ein solches Verfahren ist aus der Veröffentlichung « Hooped pipe » (Zeitschrift « Pipe Line Industry », Januar 1975, Seite 33-36) bekannt. Nachteilig dabei ist, daß bei dem bekannten System Längsnahtrohre verwendet werden sollen. Wegen ihrer Ovalität und Ungeradheit müssen zumindestens die Innenrohre eines mehrschichtigen Rohres vor dem Einfügen in die Mantelrohre gerundet werden, wie es auch beschrieben ist. Wenn, wie beschrieben, Rohre mit 2 m Durchmesser für Druckstufen bis 15 MPa (150 bar) als Längsnahtrohre in Mehrschichtbauweise hergestellt werden sollen, ist es zwangsläufig so, daß lediglich Rohrschüsse von sogenannten 3-Walzen-Biegemaschinen mit entsprechend kurzer Länge verwendet werden können, was zu einer unwirtschaftlichen Fertigung führt.

Die weiterhin vorgeschlagene Aufweitung der ineinandergesteckten Rohre durch hydraulische Expansion ist insoweit nachteilig, als schon geringfügige Wanddickenunterschiede und Festigkeitsdifferenzen, z. B. im Schweißnahtbereich, zu unterschiedlichen Aufweitbeträgen führen.

Es ist bekannt, daß Rohre in Lamellen- oder Schichtbauweise hohen Innendrücken standhalten. Häufig werden daher zwei ineinandergefügte Rohre durch Ziehen zu einem Mehrschicht-Rohr verbunden (z. B. DE-OS 25 01 156, US-PS 4 125 924). Dieses Herstellverfahren ist, anlagentechnisch bedingt, auf kleine Rohrdurchmesser mit homogener Oberfläche beschränkt.

Eine andere Möglichkeit, Mehrschicht-Rohre herzustellen, zeigt die DE-OS 30 00 665, nämlich ein Aufweiten eines inneren Rohres mit einer durch das Rohr zu pressenden Stahlkugel. Mit diesem Verfahren lassen sich aber ebenfalls nur Mehrschichtrohre geringen Durchmessers mit glatter Innenoberfläche herstellen.

Für Hochdruckleitungsrohre großer Durchmesser ist man daher schon seit längerer Zeit auf bandagierte Rohre (DE-PS 936 981) ausgewichen, bei denen das Rohr in lose aufgeschobene Umreifungen durch Flüssigkeitsdruck expandiert wurde. Dieses Verfahren hat den Nachteil, daß das Rohr zwischen den Bandagen aufgrund meist unvermeidlicher geringer Wanddickenunterschiede oder sonstiger Ungänzen ausbeulen kann, d. h. kein konstant gleicher Rohrdurchmesser entsteht.

Diesen Nachteil vermeidet ein Verfahren nach der DE-PS 548576.

Hier wird ein Herstellverfahren für längsnahtgeschweißte Hochdruckrohre großer Durchmesser in Mehrschichtbauweise vorgeschlagen, die anstelle der Bandagen langschüssige längsnahtgeschweißte Mäntel aufweisen, in die die Rohre durch Flüssigkeitsdruck expandiert werden. Dieses System macht sich zugleich den Effekt der Materialvergütung durch Kaltverfestigung zunutze, hat aber den entscheidenden Nachteil, daß die über den Mantel ragenden Rohrteile abgeschnitten werden müssen, wodurch dieses Mehrschichtrohr unwirtschaftlich wird.

Aus der Literatur « Hooped » Pipe — Pipeline and Gas Journal, November 1973) ist ein ähnliches Verfahren bekannt, das oben genannten Nachteil vermeidet, wahrscheinlich — es ist nicht beschrieben — durch entsprechende Gestaltung des hydraulischen Expandiervorganges.

Mit diesem Verfahren lassen sich kaltverfestigte Hochdruckrohre z. B. für Gasleitungen bis zu Durchmessern von 1 422 mm (56 inch) und Wanddicken von 16 mm (0,63 inch) bei Streckgrenzen des Werkstoffes bis etwa 412 N/mm$^2$ für das zu expandierende Rohr.

Größere Rohrdurchmesser und höhere Betriebsdrücke als etwa 4,5 MPa (45 bar) werden nicht für möglich gehalten, d. h. Anforderungen, die heute bei Gasfernleitungen mit Betriebsdrücken von 7 MPa (70 bar) (in Zukunft über 10 MPa (100 bar)) selbstverständlich sind.

Dies System hat weiterhin den Nachteil, daß die Außenrohre (Mäntel) nicht der Länge der Innenrohre entsprechen und von daher das fertige Mehrschichtrohr nicht einer üblichen Wasserdruck- oder zerstörungsfreien Prüfung des gesamten Rohrkörpers zugänglich ist. Im übrigen erfordert dieses System eine spezielle Bandagierung der Rohrleitungen im Bereich der Stumpfschweißverbindungen, wie es z. B. in der FR-PS 2262246 dargestellt wird. Einer weitgehenden Automatisierung des Stumpfschweißprozesses mit den üblichen, von allen Verlegern verwendeten Geräten, steht dieses Verfahren entgegen. Weiterhin dürfte es Probleme bei der Haftfestigkeit der Rohraußenisolierung geben, welche wegen der Korrosionsgefahr von Stahlrohren bei Leitungsrohren stets gefordert wird. Auf die Nachteile der hydraulischen Expansion bei Ungänzen im Werkstück wurde an anderer Stelle schon hingewiesen.

Zwei Vorteile zeigt der Stand der Technik allerdings auf, die sich die vorliegende Erfindung zunutze macht :

Es können Werkstoffe unterschiedlicher Festigkeit und Wanddicke für Außen- bzw. Innenrohr eingesetzt werden.

Im Innenrohr werden nach der Expansion Druckspannungen erzeugt, deren Vorteile noch an anderer Stelle zu erörtern sind, die aber Stand der Technik nicht genannt wurden.

Eine weitere Methode zur Herstellung mehrschichtiger Stahlrohre ist bekannt (EP-A1-0015712), bei der das Außenrohr erwärmt und das Innenrohr unterkühlt wird, so daß sich eine Durchmesserdifferenz ergibt, die ein Ineinanderfügen der Rohre erlaubt. Sodann wird Temperaturausgleich herbeigeführt unter gleichzeitigem hydraulischem Expandieren des Innenrohres. Abgesehen davon, daß dieses Verfahren nur für zweischichtige Rohre sinnvoll anwendbar ist, erscheint der hohe Energieaufwand nur gerechtfertigt für die ansonsten problematische Verbindung eines hochlegierten oder Edelstahlrohres als Innenrohr mit einem weniger teuren Stahl für das Außenrohr.

Als großes Problem hat sich bei Ausweitung der Innendrücke in Gasfernleitungen auf über 7 MPa (70 bar) die Sicherheit gegen Rißeinleitung und Rißausbreitung erwiesen. Bekannt ist, daß sich Risse in Stahlleitungen mit bis zu etwa 330 m/s ausdehnen und mehrere Kilometer Leitung total zerstören. Lösungen für dieses Problem hat der bisher genannte Stand der Technik nicht aufgezeigt.

Es sind eine Vielzahl von Vorschlägen dazu veröffentlicht worden, wie derartige Risse örtlich begrenzt werden können, z. B. durch Umwickeln von normalen Leitungsrohren mit Stahlseilen (DE-GM 7709311). Diese Wicklung an Gasleitungen im typischen Abmessungsbereich von 1 420 mm Durchmesser und 17,5 mm Wanddicke im Abstand von nur 9 m bis 200 m mit Breiten bis zu 2 m behindert die Verlegung erheblich.

Dazu wird entweder die Rohrisolierung beschädigt, wenn darüber gewickelt wird, oder das Einisolieren der Wicklung muß manuell geschehen bei Unterbrechung des automatisierten Isoliervorganges.

Bekannt ist, daß Schraubennahtrohre einen wesentlich größeren Widerstand gegen Rißausbreitung und Rißeinleitung haben als längsnahtgeschweißte Rohre wegen der hohen Kerbschlagzähigkeit in Hauptspannungsrichtung, der Rohrumfangsrichtung, die je nach Nahtsteigungswinkel entweder etwa gleichhoch, oder nur etwas unter dem Wert für die Walzrichtung eines Stahlbandes liegt. Diesen Effekt nutzt man bei einem als Rißstoppelement in eine normale einwandige Pipeline eingesetzten Schraubennahtrohr (US-PS 3698746).

Der Vorteil der Lamellenbauweise beim Mehrschichtrohr ist nicht offenbar.

Ein anderer, von der vorliegenden Erfindung ebenfalls genutzter Vorteil bei der Herstellung von Schraubennahtrohren ist die Verwendung preiswerter Stahlbänder großer Länge in kontinuierlicher Fertigung. Deshalb ist bereits die Herstellung mehrschichtiger Hochdruckrohre durch gleichzeitiges Einformen und Schweissen mehrerer übereinanderliegender Stahlbänder vorgeschlagen worden (DE-AS 1944587, DE-AS 1963805, DE-AS 2745389). Abgesehen von dem hohen maschinellen Aufwand läßt diese Fertigungsart nur in sehr beschränktem Umfang zu, daß im Innenrohr eine Druckspannung erzeugt wird ; die Praxis hat sogar gezeigt, daß im Fall der DE-AS 1963805 unvermeidliche Luftspalte zwischen den Rohrschichten entstehen.

Diese Druckspannung im Innenrohr ist bei der Lamellenbauweise natürlich erwünscht.

Bekannt sind mechanische Expander, die wegabhängig, d. h. um einen festgelegten Betrag, Rohre aufweiten können. Für den Fall der Anfertigung von Schraubennahtrohren mit Schweißnahtüberhöhungen an Innenrohren gibt es speziell angepaßte Aggregate (DE-OS 2627172, DE-OS 2641051), die ebenfalls von der Erfindung genutzt werden.

Aufgabe der Erfindung ist es, ausgehend vom Stand der Technik ein verbessertes Verfahren vorzuschlagen, bei dem die Vorteile der Lamellenbauweise von Rohren, die Rißeinleitungs- und Rißausbreitungsvorteile von Schraubennahtrohren sowie deren wirtschaftliche Herstellung bei Verwendung preiswerter, aber hochfester, thermomechanisch gewalzter Stahlbänder miteinander verknüpft werden, wobei das Stahlrohr einen exakt einstellbaren Außendurchmesser hat, wahlweise zwei oder mehr Schichten zur Bildung großer Wanddicken für Hochdruckgasleitungen mit über 8 MPa (80 bar) Betriebsdruck aufweist, gegen Schwefel-Wasserstoff-Korrosion weitgehend beständig ist und die Verwendung unterschiedlicher Werkstoffgüten und -dicken für Innen- und Außenrohr ermöglicht, bei geringstmöglichen Aufweitungsbeträgen für die Einzelrohre.

Die Aufgabe wird erfindungsgemäß gelöst durch die in dem Anspruch 1 beschriebenen Merkmale.

Vorteilhafte Ausgestaltungen der Erfindung sind in den weiteren Ansprüchen erfaßt.

Bei diesem Verfahren werden alle bekannten Vorzüge des Schraubennahtrohres in sinnvoller Weise zur Herstellung eines mehrschichtigen spaltlosen hochfesten, gegen Rißeinleitung und Rißfortleitung und Spannungsrißkorrosion weitestgehend beständigen Leitungsrohr für Höchstdrücke bei großen Durchmessern angewendet.

Insbesondere die an sich bekannte Tatsache, daß ein unter Druckspannung stehendes Rohr (Innenseite) unanfällig gegen $H_2S$-Korrosion, die durch schwefeliges Naturgas entstehen kann, ist, wird hier als Effekt genutzt.

Durch die bekanntermaßen größere Geometrievollkommenheit der Schraubennahtrohre gegenüber Längsnahtrohren läßt die Differenz zwischen Innendurchmesser der äußeren Rohre gegenüber den Außendurchmessern der Innenrohre sich ≤ 1 % halten, und damit braucht nur ein geringer Verformungsweg beim Expandieren zurückgelegt zu werden. Dadurch wird die Fertigungszeit verkürzt und der Hub des Expanders, somit auch seine Baugröße, wird gering.

Mechanische Expander lassen sich gezielt über bestimmte Wegstrecken steuern und somit ein exakter Außendurchmesser für das Mehrschichtrohr einstellen, was bei Expandieren mit Flüssigkeitsdruck nur durch Verwendung einer Außenform möglich ist. Mit mechanischen Expandern entstehen auch bei unterschiedlichen Materialhärten innerhalb einer Rohrschicht spaltlose Mehrschichtrohre, da nicht druck- sondern wegabhängig expandiert wird. Bei Einsatz von Schraubennahtrohren gleicher Länge, unter Berücksichtigung eines Verkürzungsbetrages durch das Expandieren, erreicht man gleiche Schichtlängen des Mehrschichtenrohres mit der Konsequenz, daß dieses Rohr beim Leitungsbau mit einer Rundnaht verschweißbar ist und kein Materialverlust durch Abschneiden überstehender Längen entsteht. Auf die Vorteile dieser Rohre gegen Rißeinleitung etc. wegen der günstigen Lage der Hauptspannungsrichtung zur Stahlbandwalzrichtung wurde an anderer Stelle schon eingegangen. Ein solches Mehrschichtrohr läßt sich mit der heutigen Technik — Warmbreitband ist bis etwa 16 oder 18 mm in der Qualität X 70 sicher herstellbar — z. B. beim Zweischichtrohr problemlos bis 32 oder 36 mm Gesamtwanddicke herstellen. Damit sind die in Zukunft verwendeten Leitungsdrücke für Gasleitungen auf jeden Fall abzudecken, falls gewünscht, ist diese Wanddicke natürlich auch durch drei 11 mm dicke, ineinander expandierte Schraubennahtrohre herstellbar.

Das spaltlose Fertigen der Rohre erfordert normalerweise ein Abarbeiten der Schweißnahtüberhöhung.

Erfindungsgemäß kann so geschweißt werden, daß keine Nahtüberhöhung entsteht.

Gemäß einer weiteren Fortbildung des Erfindungsgedankens soll das Außenrohr beim gemeinsamen Expandieren mit Innenrohren über seine Streckgrenze hinaus expandiert werden. Das hat den Vorteil, daß die Spannungsdifferenz zwischen Außen- und Innenrohr größer wird, also auch größere Druckspannungen im Innenrohr einleitbar sind.

Weil Schraubennahtrohre exakte Geometrieabmessungen haben, brauchen sie vor dem Ineinanderfügen nicht gerichtet oder gerundet werden, mit allen Konsequenzen für eine günstige Spannungsverteilung im Mehrschichtrohr ; die Spannungen im Einzelrohr sind an sich schon gleichmäßig verteilt. Für hohe Anforderungen oder als Vorbereitung für eine Präparierung der Oberflächen können die Einzelrohre vor dem Ineinanderfügen entzundert werden. Neben den später aneinanderliegenden Rohroberflächen können gleichzeitig natürlich die anderen Flächen für eine Rohrisolierung vorbereitet werden. Gemäß einer weiteren erfindungsgemäßen Ausbildung des Verfahrens soll die bei der Schraubennahtrohrfertigung entstehenden Aufdachung im Nahtbereich an den Innenrohren niedriger gehalten werden als bei den Außenrohren, damit beim Ineinanderexpandieren die Aufdachungen ineinandergeschachtelt werden. Weitere Vorteile sind natürlich die geringere Durchmesservergrößerung des Innenrohres bei geringen Aufdachungen.

Beim Zusammenziehen nach dem Aufweiten dehnen sich die Rohrschichten etwas in Längsrichtung. Dieser Tatsache ist durch Kürzung der sich aufgrund geringerer Verformung weniger dehnenden Außenrohre gegenüber den Innenrohren bei der Einzelfertigung Rechnung zu tragen. Dadurch läßt sich ein in allen Schichten exakt gleich langes Mehrschichtrohr herstellen. Dies hat den Vorteil, daß ein derartiges Rohr leichter einer 100 %igen Prüfung sowohl bei der Wasserdruck- als auch der ZF-Prüfung und den manuellen Maß- und Oberflächenkontrollen unterzogen werden kann.

In manchen Fällen scheint es sinnvoll, nach Vorliegen des fertigen Mehrschichtrohres eine nochmalige Prüfung des Grundwerkstoffes, d. h. des Bereiches zwischen den Schweißnähten durchzuführen. Dazu wäre es erforderlich, daß die Schraubennähte möglichst übereinanderliegen. Um dieses zu erreichen, müssen also die Steigungshöhen der Schraubennähte am Innenrohr mit den Steigungshöhen der Schraubennähte am Außenrohr im fertigen Zustand übereinstimmen, d. h. die Steigungshöhen müssen durch Wahl entsprechender Winkel und Bandbreiten vor dem Ineinanderfügen der Innen- und Außenrohre entsprechend unterschiedlich sein wegen der oben beschriebenen Längskontraktion der Rohre beim Expandieren.

Für die Verbindung mehrschichtiger Rohre zu einer Leitung durch eine für alle Schichten gemeinsame Rundnaht ist es erfindungsgemäß vorteilhaft, wenn vor dem Ineinanderexpandieren der Rohre zwischen die Rohrschichten an den Rohrenden unlaufende Homogenisierungsfolien eingelegt werden. Eine solche metallische Folie würde ein gemeinsames Verschweißen der Rohrschichten untereinander oder das Vorschweißen eines Flansches vor dem Stumpfverschweissen der Mehrschichtrohre zu einer Stahlleitung überflüssig machen.

Sinnvollerweise werden die einzeln gefertigten Schraubennahtrohre bevor sie ineinandergefügt werden einzeln einer Grundwerkstoff-, Schweißnaht- und Oberflächenkontrolle unterzogen, damit sichergestellt ist, daß nicht bereits fehlerhafte Rohre zu Mehrschichtrohren verarbeitet werden.

Zur Erhöhung der Arbeitsgeschwindigkeit beim Expandieren kann es vorteilhaft sein, eventuelle Schweißnahtüberhöhungen im Innern des innersten Rohres zunächst abzuarbeiten und dann mit einem normalen Rohrexpander, d. h. ohne spiralförmig verlaufende Ausnehmungen, das Expandieren vorzunehmen. Dabei kann natürlich bei kurzen Rohrlängen ein Expander verwendet werden, der das gesamte Rohr auf einmal aufweitet und nicht wie es bisher, aus Gründen geringeren maschinentechnischen Aufwandes, geschieht, durch schrittweises Vorschieben des Expanders im Rohr.

Hochfeste thermomechanisch gewalzte Stahlbänder sind mit zunehmenden Festigkeitsstufen teurer. Daher ist es erfindungsgemäß sinnvoll, für das Außenrohr Stahl hoher Festigkeit zu verwenden und für die Innenrohre billigere Stähle geringerer Festigkeit, wobei — anforderungsbedingt — ein Innenrohr geringstmöglicher Festigkeit gewählt wird. Thermo-mechanisch gewalzte Stahlbänder der Güte X 70 sind heute als Vormaterial für Schraubennahtrohre erhältlich. Sie weisen eine Streckgrenze von > 480 N/mm² auf.

Besonders effektiv sind Schichtrohre, die aus einzelnen Schraubennahtrohren bestehen, gegen Rißfortschreitung einsetzbar, wenn die Schraubennähte der einzelnen Rohrschichten sich kreuzen, d. h. wenn deren Steigungswinkel unterschiedlich sind oder gar eine gegenläufige Steigung aufweisen. Dadurch wird der Rißfortschreitung stets ein erheblicher Widerstand von Steigungshöhe zu Steigungshöhe entgegengesetzt, der zum Stoppen des Risses führt.

Nachfolgend soll anhand von Zeichnungen der Erfindungsgegenstand näher erläutert werden. Es zeigen :

Figur 1 qualitativ die Toleranzen an Schraubennahtrohren,

Figur 2 Schraubennahtrohre mit gleicher Steigungshöhe, aber gegeneinander verschobenen Schraubennähten,

Figur 3 Schraubennahtrohre mit gleicher Steigung und gegenüberliegenden Schraubennähten,

Figur 4 einen mechanischen Rohrexpander in Funktion,

Figur 5 einen Querschnitt durch einen Expanderkopf gem. Fig. 4,

Figur 6 den qualitativen Verlauf des Expandierens und Entspannens in einem Spannungs-, Dehnungsdiagramm und

Figur 7 schematisch den Verlauf des Expandier- und Entspannungsvorganges in Spannungs-Dehnungs-Diagrammen für Stähle der Qualität X 70 für das Außenrohr und X 63 für das Innenrohr eines zweischichtigen Rohres sowie ein Druck-Dehnungs-Diagramm für dieses Mehrschichtrohr.

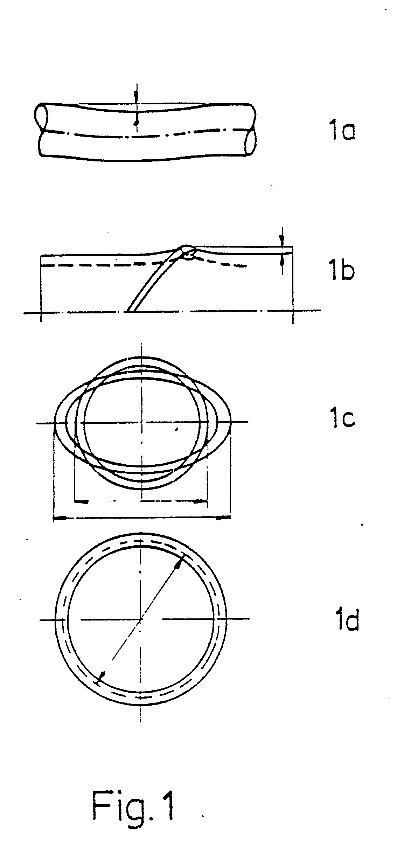

In Fig. 1 sind qualitativ die möglichen Abweichungen eines Schraubennahtrohres von der theoretisch exakten Form aufgezeigt. Fig. 1a stellt Geradheitsabweichungen von der Längsachse, Fig. 1b die sogenannte Aufdachung (« Peaking ») dar, welche durch nicht exakte Biegung der Kanten des Stahlbandes bei der Fertigung der einzelnen Schraubennahtrohre entsteht beiderseits der Schraubennähte. Fig. 1c zeigt mögliche Ovalitätsabweichungen der einzelnen Schraubennahtrohre untereinander, während Fig. 1d Abweichungen vom Nenndurchmesser eines 'Schraubennahtrohres darlegt, wie sie durch Toleranzen z. B. der Bandsäbeligkeit, welche nicht ganz ausgesteuert wurde, entstehen können.

Für die reibungslose Fertigung z. B. eines zweischichtigen Rohres, d. h. der Sicherstellung, daß jedes beliebige Rohr aus der Fertigung der Innenrohre in jedes beliebige Rohr aus der Fertigung der Außenrohre paßt, sind alle geometrischen Toleranzen aufeinander abzustimmen ; ein Problem, welches aus der Serienfertigung etwa im Automobilbau bekannt ist. Im vorliegenden Fall bedeutet dies : Ein Innenrohr mit dem größten

Außendurchmesser
Ovalität
Ungeradheit
Aufdachung

muß in ein Außenrohr mit dem geringsten

Außendurchmesser
größter Ovalität um 90° zum Innenrohr versetzt
Ungeradheit
Aufdachung

passen.

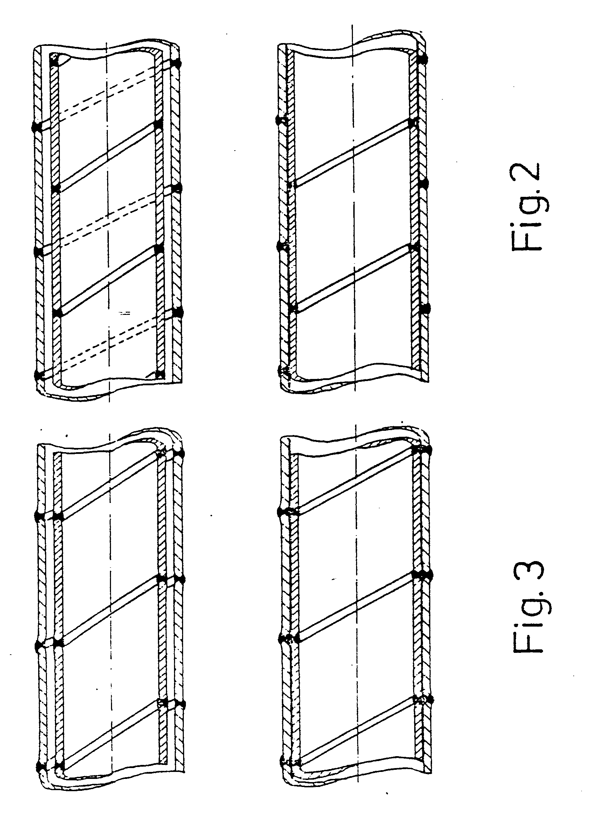

Fig. 2 zeigt zwei ineinandergefügte Schraubennahtrohre, ohne Nahtüberhöhung an den gegenüberliegenden Oberflächen, vor und nach dem Expandieren. Die Schraubennähte liegen sich beliebig gegenüber. Sollte in bestimmten Fällen eine Aufdachung bei der Einzelfertigung der Schraubennahtrohre unvermeidbar sein, läßt sich gemäß Fig. 3, bei gleicher Steigungshöhe der Nähte, das Innenrohr gegenüber dem Außenrohr so anordnen, daß sich die Aufdachungen beim expandierten fertigen Rohr ineinanderlegen. Diese Aufdachungen liegen beim fertigen Mehrschichtrohr natürlich nur dann vor, wenn nicht bis weit über die Streckgrenze des Außenrohres hinaus expandiert wurde.

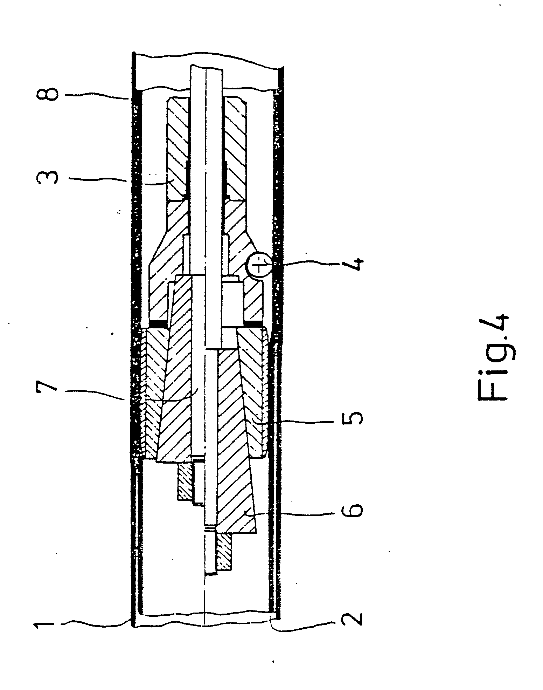

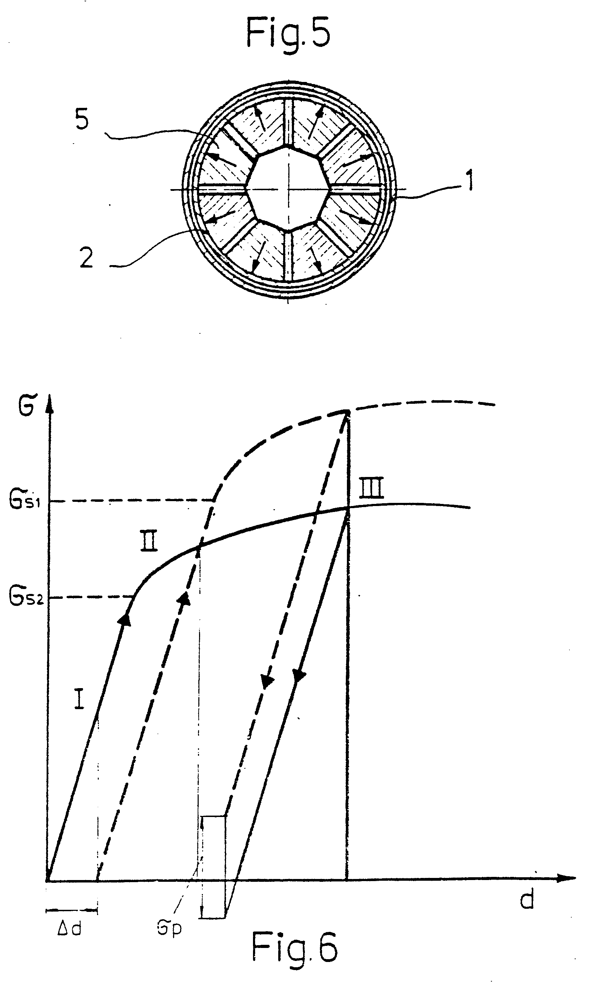

Fig. 4 zeigt einen mechanischen Expander in Funktion. Mit dem Stützrohr 3 wird der Expander, auf Rollen 4 fahrend, im Innenrohr 2 schrittweise entsprechend der Länge der Preßbacken 5 vorgeschoben. Im unteren Teil der Fig. 4 ist die eingezogene Stellung der Preßbacken 5, die radial über Spannkeile 6 und Zugstange 7 verschoben werden, dargestellt während des Vorschiebens des Expanders. Im oberen Teil der Zeichnung ist der Aufweitvorgang zu sehen ; das Innenrohr 2 wird solange gedehnt, bis dessen Außenfläche an der Innenfläche des Außenrohres 1 anliegt ; sodann werden — wie gezeigt — beide Rohre gemeinsam auf den vorbestimmten Außendurchmesser des Mehrschichtrohres 8 expandiert. Die geringfügige Durchmesserverringerung des Mehrschichtrohres durch elastische Rückfederung ist nicht angedeutet. Fig. 5 zeigt einen Schnitt durch den Expanderkopf während des Expandierens des Innenrohres 2. Die Preßbacken 5 üben gleichmäßig Druck auf die Rohrwand aus.

Der qualitative Verlauf eines Expandierungsvorgangs bei der Herstellung eines Zwei-Schicht-Rohres aus einem Innenrohr mit einer gegenüber dem Außenrohr geringeren Streckgrenze ist in Fig. 6 in einem Spannungs-Dehnungs-Diagramm dargestellt. Die Spannung $\sigma$ (Sigma) ist über der Dehnung d, d. h. der Durchmesseränderung der Einzelrohre und des Mehrschichtrohres aufgetragen. Ein Innenrohr wird mechanisch expandiert (durchgezogene Linie) von seinem Ausgangsdurchmesser aus — zunächst elastisch — bis an Punkt I sein Außendurchmesser den Innendurchmesser des Außenrohres erreicht ; die Durchmesserdifferenz $\Delta$ d ist überbrückt. Danach werden beide Rohre gemeinsam weiter expandiert. Bei einem Durchmesser am Punkt II, das Innenrohr wird bereits plastisch gedehnt, wird die Spannung im Außenrohr größer als im Innenrohr. Eine weitere Ausdehnung bis zum vorbestimmten Enddurchmesser des Mehrschichtrohres (Punkt III) belastet das Außenrohr ebenfalls bis in den plastischen Bereich. Nach Beendigung des Expandierens entspannt sich das Mehrschichtrohr ; beide Rohrdurchmesser reduzieren sich um einen konstanten Betrag. Es bleibt in der Außenschicht (Außenrohr) eine Zugspannung, in der Innenschicht (Innenrohr) eine Druckspannung erhalten. Die Spannungsdifferenz (Preßspannung $\sigma_p$) sorgt für den dauerhaften Verbund der Rohrschichten.

Bei einer Expansion des Außenrohres bis in den plastischen Bereich — wie hier gezeigt — ist die Preßspannung, d. h. Sicherheit gegen Trennung der beiden Rohrschichten, größer als bei Belastung des Außenrohres bis unterhalb der Streckgrenze.

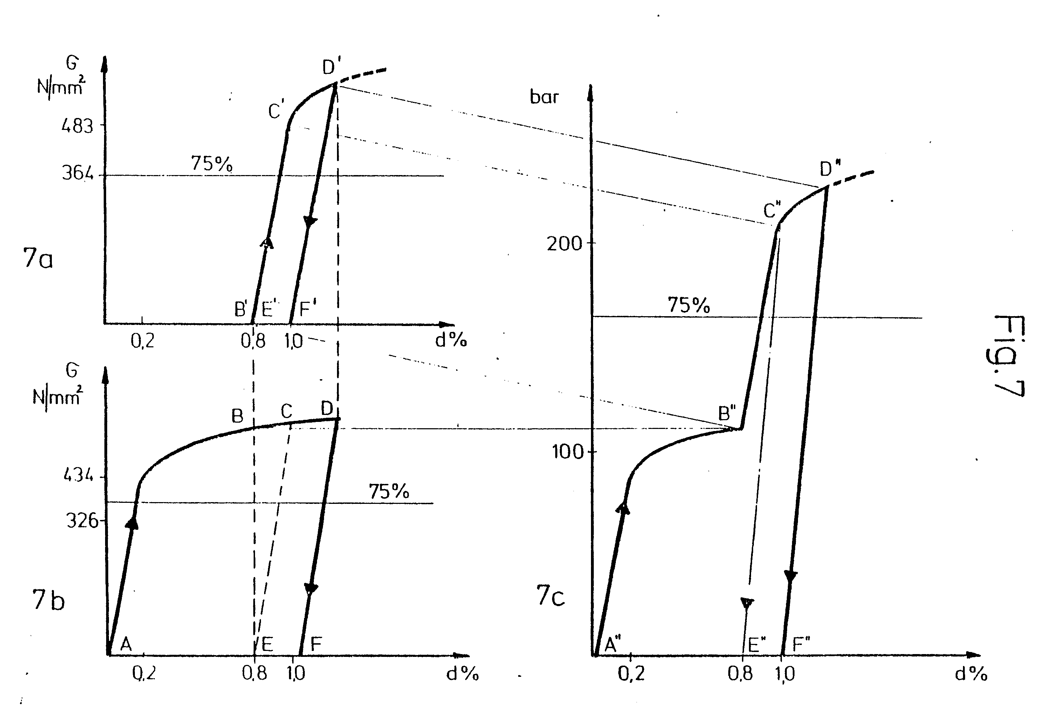

In Fig. 7 sind analog zu Fig. 6 die Spannungs-Dehnungs-Diagramme separat für ein Außenrohr aus Material X 70 (Streckgrenze 485 N/mm²) und ein Innenrohr aus X 63 (Streckgrenze 434 N/mm²) dargestellt (Fig. 7a, 7b). Bei einem Betriebsdruck von 75 % der Streckgrenze (364 N/mm²) für das einzelne Außenrohr läge im Innenrohr die Spannung bereits unzulässig über dessen 75 %-Wert (326 N/mm²). Eine Übertragung der Verhältnisse in ein Druck-Dehnungs-Diagramm (Fig. 7c) für ein Mehrschichtrohr mit 1 422 mm Außendurchmesser, 2 × 14,2 mm Wanddicke = 28,4 mm bei einem Spalt zwischen Außenrohr und Innenrohr 5,7 mm ≙ 0,8 % Durchmesserdifferenz.

Bei einem Betriebsdruck bis 75 % der Streckgrenze werden beide Rohrschichten nur im elastischen Bereich belastet (Betriebsdruck von weit über 10 MPa (100 bar). Die Preßspannung zwischen beiden Rohrschichten bleibt erhalten und damit der Vorteil bezüglich Spannungsrißkorrosion.

Analog zu diesem Ausführungsbeispiel lassen sich natürlich auch drei oder mehr Rohrschichten bei einem Mehrschichtrohr verwirklichen.

## Patentansprüche

1. Verfahren zur Herstellung mehrschichtiger spaltloser Stahlrohre durch Ineinanderfügen einzeln gefertigter geschweißter Stahlrohre unterschiedlichen Durchmessers, mit anschließendem Expandieren durch Innendruck, dadurch gekennzeichnet, daß die einzelnen Stahlrohre als Schraubennahtrohre annähernd gleicher Länge mit einer Differenz ≦ 1 % zwischen dem Außendurchmesser eines Innenrohres und dem Innendurchmesser eines äußeren Rohres gefertigt und die Schraubennahtrohre nach. Ineinanderfügen mittels mechanischem, wegabhängigem Expander auf einen vorbestimmten Außendurchmesser des mehrschichtigen Stahlrohres aufgeweitet werden.

2. Verfahren nach Anspruch 1, dadurch gekennzeichnet, daß die Schraubennähte der einzelnen Stahlrohre so geschweißt werden, daß zumindest die aneinanderliegenden Rohroberflächen keine Schweißnahtüberhöhungen aufweisen.

3. Verfahren nach Anspruch 1 und 2, dadurch gekennzeichnet, daß das Außenrohr über die Streckgrenze hinaus expandiert wird.

4. Verfahren nach den Ansprüchen 1-3, dadurch gekennzeichnet, daß die Innen- und Außenrohre ohne vorherige Geometrieänderungen ineinandergefügt werden.

5. Verfahren nach den Ansprüchen 1-4, dadurch gekennzeichnet, daß die im Mehrschichtenrohr aneinanderliegenden Oberflächen vor dem Ineinanderfügen entzundert werden.

6. Verfahren nach den Ansprüchen 1-5, dadurch gekennzeichnet, daß die im Mehrschichtenrohr aneinanderliegenden Oberflächen präpariert werden.

7. Verfahren nach den Ansprüchen 1-6, dadurch gekennzeichnet, daß Aufdachungen an den Schraubennähten der Innenrohre niedriger gehalten werden als bei den Außenrohren.

8. Verfahren nach den Ansprüchen 1-7, dadurch gekennzeichnet, daß die einzeln gefertigten Außenrohre um einen vorbestimmten Betrag kürzer geschnitten sind als die Innenrohre, wobei der Betrag dem durch Aufweitung entstehenden Kürzungsbetrag am Innenrohr entspricht.

9. Verfahren nach den Ansprüchen 1-8, dadurch gekennzeichnet, daß zwischen den Innen- und Außenrohren vor dem Expandieren an den Rohrenden eine Homogenisierungsfolie eingelegt wird.

10. Verfahren nach den Ansprüchen 1 und 2, dadurch gekennzeichnet, daß die einzeln gefertigten Schraubennahtrohre vor dem Ineinanderfügen einzeln einer Grundwerkstoff- und Schweißnaht- und/oder Oberflächenkontrolle unterzogen werden.

11. Verfahren nach einem oder mehreren der vorhergehenden Ansprüche, dadurch gekennzeichnet, daß Schweißnahtüberhöhungen im Innern der Innenrohre vor dem Einfügen in die Außenrohre abgearbeitet werden.

## Claims

1. Process for the production of multi-layer gapless steel tubes from individual welded steel tubes of different diameter placed inside each other, with subsequent expansion by internal pressure, characterised in that the individual steel tubes are made as helically-seamed tubes of approximately the same length with a difference ≤ 1 % between the external diameter of an inner tube and the internal diameter of an outer tube and that the helically-seamed tubes, after being placed inside each other, are enlarged to a predetermined external diameter of the multi-layer steel tube by means of a mechanical stroke-dependent expander.

2. Process according to claim 1, characterised in that the helical seams of the individual steel tubes are welded such that at least the tube surfaces contacting each other have no welding seam projections.

3. Process according to claim 1 and 2, characterised in that the outer tube is expanded beyond the elastic limit.

4. Process according to claims 1 to 3, characterised in that the inner and outer tubes are placed inside each other without previous geometry changes.

5. Process according to claims 1 to 4, characterised in that the surfaces contacting each other in the multi-layer tube are scoured before being placed inside each other.

6. Process according to claims 1 to 5, characterised in that the surfaces contacting each other in the multi-layer tube are pretreated.

7. Process according to claims 1 to 6, characterised in that projections on the helical seams of the inner tubes are maintained less than on the outer tubes.

8. Process according to claims 1 to 7, characterised in that the individual outer tubes are cut shorter than the inner tubes by a predetermined amount, the amount corresponding to the shortening of the inner tube resulting from expansion.

9. Process according to claims 1 to 8, characterised in that a homogenising layer is placed on the tube ends between the inner and outer tubes before the expansion.

10. Process according to claims 1 and 2, characterised in that the individual helically-seamed tubes are subjected individually to a workpiece and helical seam and/or surface control before being placed inside each other.

11. Process according to one or more of the preceding claims, characterised in that welding seam projections inside the inner tubes are machined off before insertion into the outer tubes.

**Revendications**

1. Procédé pour la fabrication de tubes à parois multiples, à jonction hélicoïdale, par l'insertion les uns dans les autres de tubes d'acier soudé fabriqués séparément et de diamètres différents, suivie d'une dilatation sous l'effet d'une pression interne, caractérisé en ce que les différents tubes d'acier sont réalisés sous forme de tubes à jonction hélicoïdale de longueurs approximativement égales, la différence étant inférieure ou égale à 1 % entre le diamètre extérieur d'un tube intérieur et le diamètre intérieur d'un tube extérieur, et les tubes à jonction hélicoïdale sont dilatés, après insertion les uns dans les autres, au moyen d'un dispositif d'expansion mécanique influencé par le déplacement, jusqu'à un diamètre extérieur prédéterminé du tube d'acier à parois multiples.

2. Procédé selon la revendication 1, caractérisé en ce que les jonctions hélicoïdales des différents tubes d'acier sont réalisées par soudage, de façon qu'au moins les surfaces de tubes voisines ne présentent pas de surépaisseurs dues au cordon de soudure.

3. Procédé selon les revendications 1 et 2, caractérisé en ce que le tube extérieur est dilaté au-delà de la limite d'élasticité.

4. Procédé selon les revendications 1 à 3, caractérisé en ce que les tubes intérieurs et extérieurs sont insérés les uns dans les autres sans modifications géométriques préalables.

5. Procédé selon les revendications 1 à 4, caractérisé en ce que les surfaces venant au contact les unes des autres dans le tube à parois multiples, sont décalaminées avant l'insertion.

6. Procédé selon les revendications 1 à 5, caractérisé en ce que les surfaces venant au contact les unes des autres dans le tube à parois multiples subissent une préparation.

7. Procédé selon les revendications 1 à 6, caractérisé en ce que les surépaisseurs aux joints hélicoïdaux des tubes intérieurs sont maintenues plus faibles que sur les tubes extérieurs.

8. Procédé selon les revendications 1 à 7, caractérisé en ce que les tubes extérieurs fabriqués séparément sont recoupés plus courts que les tubes intérieurs, à raison d'une longueur prédéterminée, cette longueur correspondant à la longueur du raccourcissement provoqué par l'élargissement du tube intérieur.

9. Procédé selon les revendications 1 à 8, caractérisé en ce qu'une feuille d'homogénéisation est insérée entre les tubes intérieurs et les tubes extérieurs, aux extrémités des tubes et avant la dilatation.

10. Procédé selon les revendications 1 et 2, caractérisé en ce que les tubes à jonction hélicoïdale fabriqués séparément sont soumis séparément, avant d'être insérés les uns dans les autres, à un contrôle du matériau de base et du cordon de soudure et/ou à un contrôle de surface.

11. Procédé selon une ou plusieurs des revendications précédentes, caractérisé en ce que les surépaisseurs des cordons de soudure, à l'intérieur des tubes intérieurs, sont éliminées par usinage avant l'insertion dans le tube extérieur.

1a

1b

1c

1d

Fig.1

Fig. 3

Fig. 2

Fig.4

## Fig.5

## Fig.6

Fig. 7

7a

7b

7c

0 074 482